# EUROPÄISCHE PATENTSCHRIFT

(11) **EP 1 301 368 B1**
(45) Veröffentlichungstag und Bekanntmachung des Hinweises auf die Patenterteilung: **14.01.2004**
(21) Anmeldenummer: 01984321.8
(22) Anmeldetag: 19.07.2001
(51) Int. Cl.: B60K 17/344

(54) **VERTEILERGETRIEBE FÜR KRAFTFAHRZEUGE MIT GELÄNDEGANG**
POWER DIVIDER FOR MOTOR VEHICLES COMPRISING AN OFF-ROAD SPEED GEAR
BOITE DE VITESSES INTERMEDIAIRE POUR VEHICULES AUTOMOBILES COMPORTANT UN RAPPORT TOUT TERRAIN

(30) Priorität: 19.07.2000 AT 5272000 U
(43) Veröffentlichungstag der Anmeldung: 16.04.2003
(73) Patentinhaber: Magna Steyr Fahrzeugtechnik AG & Co KG, 8041 Graz (AT)
(72) Erfinder: GLASSNER, Rudolf, A-3623 Kottes (AT)
(74) Vertreter: Kovac, Werner, Dipl.-Ing.
(86) Internationale Anmeldenummer: PCT/AT2001/000249
(87) Internationale Veröffentlichungsnummer: WO 2002/008006

(56) Entgegenhaltungen:
- EP-A- 0 882 912
- US-A- 5 702 321

## Beschreibung

Die Erfindung handelt von einem Verteilergetriebe für Kraftfahrzeuge mit Geländegang, bestehend aus einem Gehäuse, einer Eingangswelle, einer mit dieser koachsialen ersten Ausgangswelle, einer gegenüber dieser versetzten zweiten Ausgangswelle, einer Untersetzungseinheit, einer Kupplungseinheit und einem Versatztrieb. Diese Form von Verteilergetrieben wird auch als "single-offset" bezeichnet. Sie wird vor allem für allradgetriebene Personenkraftfahrzeuge und leichte Nutzfahrzeuge mit längsliegendem Motor-Getriebeblock eingesetzt, wobei mittels der Untersetzungseinheit vom Straßengang in einen Geländegang umgeschaltet werden kann, oft auf ein Zwischenachsdifferential verzichtet und der Antrieb der zweiten angetriebenen Achse zuschaltbar ist.

Ein gattungsgemäßes Verteilergetriebe ist aus der EP 882 912 A2 bekannt. Bei diesem ist die Untersetzungseinheit auf der Seite der Eingangswelle ein Planetengetriebe mit gehäusefestem Hohlrad und Abtrieb am Planetenträger. Gleich dahinter ist die zugehörige Schaltvorrichtung untergebracht. Darauf folgt dann das treibende Rad des Versatztriebes und schließlich eine Kupplung für die Zuschaltung der zweiten angetriebenen Achse.

Diese Anordnung hat verschiedene Nachteile. Wegen des gehäusefesten Hohlrades läuft das Planetengetriebe auch im Strassengang kämmend mit, was Geräuschentwicklung und Verschleiß erhöht; zudem ergeben sich bei Planetengetrieben dieser Bauart bei der Auslegung für die für einen Geländegang üblichen Untersetzungen ungünstig kleine Planetenräder. Weiters sind Hohlräder in der Fertigung relativ teuer. Die Schaltvorrichtung zwischen Planetengetriebe und treibendem Rad des Versatztriebes erhöht die Baulänge und verschiebt den Versatztrieb nach hinten, beides ist unter anderem aus Gründen der Körperschallabstrahlung durch das Gehäuse ungünstig.

Es ist daher Ziel der Erfindung, bei einem gattungsgemäßen Verteilergetriebe die erwähnten Mängel zu beheben. Es soll ruhig und verschleißarm laufen, möglichst klein und billig sein, und die zweite Ausgangswelle soll möglichst weit vorne sein.

Erfindungsgemäß wird das dadurch erreicht, dass die Untersetzungseinheit besteht aus: einem mit der Eingangswelle drehfest verbundenen zentralen Antriebszahnrad, einem ebenfalls zentralen Abtriebszahnrad und mindestens zwei um gehäusefeste Achsen drehbare Vorgelege mit je zwei Vorgelegezahnrädem, von denen eines mit dem zentralen Antriebszahnrad und das andere mit dem zentralen Abtriebszahnrad kämmt, einer ersten mit dem zentralen Antriebszahnrad drehfest verbundenen ersten Abtriebswelle und einer mit dem zentralen Abtriebszahnrad drehfest verbundenen rohrförmigen zweiten Abtriebswelle, welche beiden Abtriebswellen zur mit der Ausgangswelle koachsialen Kupplungseinheit führen.

Eine so gestaltete Untersetzungseinheit gewährt im Strassengang direkten Durchtrieb bei leer mitlaufenden Vorgelegezahnrädern, im Geländegang sind optimale Untersetzungsverhältnisse (ungefähr 2,5:1) leicht realisierbar. Der Vergleich der Untersetzungseinheit, die auch als hohlradloses Planetengetriebe mit feststehendem Planetenträger aufgefasst werden kann, mit dem Planetengetriebe nach dem Stand der Technik zeigt, dass die Baulänge wegen des Fortfallens der Wangen eines Planetenträgers wesentlich kürzer ist. Auch in einer Ebene quer zur Achse ist der Raumbe-darf durch den Fortfall des Hohlrades wesentlich reduziert. Er reduziert sich weiter, wenn die beiden Vorgelege - einander gegenüber - etwa in einer horizontalen Ebene liegen. Dadurch können auch Getriebe mit nur geringem Versatz zwischen Eingangswelle und zweiter Ausgangswelle, und/oder auch mit seitlichem Versatz ausgeführt werden.

Weiters gestatten es die beiden koachsialen Abtriebswellen, von denen eine eine Hohlwelle ist, die Kupplungseinheit von der Untersetzungseinheit entfernt anzuordnen. Dadurch kann der Versatztrieb in Längsrichtung betrachtet zwischen Untersetzungseinheit und Kupplungseinheit angeordnet sein, wobei dessen treibendes Rad mit einer zweiten Hohlwelle drehbar gelagert ist (Anspruch 2). Durch die von der Untersetzungseinheit entfernt angeordnete Kupplungseinheit erhält man ein besonders kurzes und steifes Getriebegehäuse und die zweite Ausgangswelle endet sehr weit vorne. Weiters ist so der Durchmesser der Kupplungseinheit nicht beschränkt, sodass große Momente übertragbar und auch synchronisierbar sind.

In einer bevorzugten Ausführungsform besitzt die Kupplung einen ersten und einen zweiten Primärteil und einen dazwischen angordneten in Achsrichtung verschiebbaren Sekundärteil, wobei der erste Primärteil mit der ersten Abtriebswelle und der zweite Primärteil mit der zweiten Abtriebswelle drehfest verbunden ist und der Sekundärteil eine Schaltmuffe bildet, die mit der ersten Ausgangswelle drehfest, aber achsial verschiebbar verbunden ist (Anspruch 3). Der Sekundärteil ist zwischen den beiden Primärteilen angeordnet und ist von einer Neutralstellung aus für die Wahl zwischen Gelände- und Strassengang entweder mit dem einen oder mit dem anderen in Eingriff bringbar. Die übergeifende Schaltmuffe bildet in beiden Gängen die Verbindung zur ersten Ausgangswelle.

In Weiterbildung der Erfindung ist die Schaltmuffe des Sekundärteiles mittels einer Zuschaltkupplung mit dem treibenden Rad des Versatztriebes verbindbar (Anspruch 4). Der Sekundärteil der einen Kupplung ist somit treibender Teil der Zuschaltkupplung, das ergibt wenig Bauteile und kurze Baulänge auch der Kupplungseinheit. Vorzugsweise besteht die Zuschaltkupplung aus einem mit dem treibenden Rad des Versatztriebes drehfest, aber verschiebbar verbundenen ersten Kupplungsteil und aus einem mit der Schaltmuffe drehfest verbunden zweiten Kupplungsteil (Anspruch 5). So ist die Schaltung des Geländeganges von der Zuschaltung nicht beeinträchtigt. Beide Kuplungen können unabhängig voneinander geschaltet werden.

Für die Ausbildung der Kupplungen gibt es im Rahmen der Erfindung verschiedene Möglichkeiten. Sie können formschlüssig als einfache Klauenoder Muffenkupplungen ausgeführt sein, oder die Kupplungsteile weisen Synchronisiervorrichtungen auf (Anspruch 6). Dabei erweist sich die Anordnung der Kupplungseinheit hinter dem Verteilergetriebe als besonderer Vorteil, weil so der Durchmesser der Kupplungsteile nicht beschränkt ist und für die Synchronisierung ein großer Durchmesser zur Verfügung steht. Das ist wichtig, weil an die Synchronisierung bei dem großen Stufensprung zwischen Strassen- und Geländegang hohe Anforderungen gestellt werden.

Ein weiterer Vorteil der Anordnung der Kupplungseinheit hinter dem Verteilergetriebe lässt sich gewinnen, wenn diese von einem gesonderten, an der hinteren Seite des Gehäuses angeflanschten Kupplungsgehäuse aufgenommen ist (Anspruch 7). Das Gehäuse des Verteilergetriebes ist dann noch kürzer und Montage, Zugänglichkeit und Schallemissionsverhalten sind verbessert.

Im folgenden wird die Erfindung anhand von Abbildungen eines bevorzugten Ausführungsbeispieles beschrieben und erläutert. Es stellen dar:
- Fig. 1:: Einen Längsschnitt,
- Fig. 2:: Einen schematischen Schnitt nach II-II in Fig. 1, und
- Fig. 3:: Detail m in Fig. 1 vergrößert.

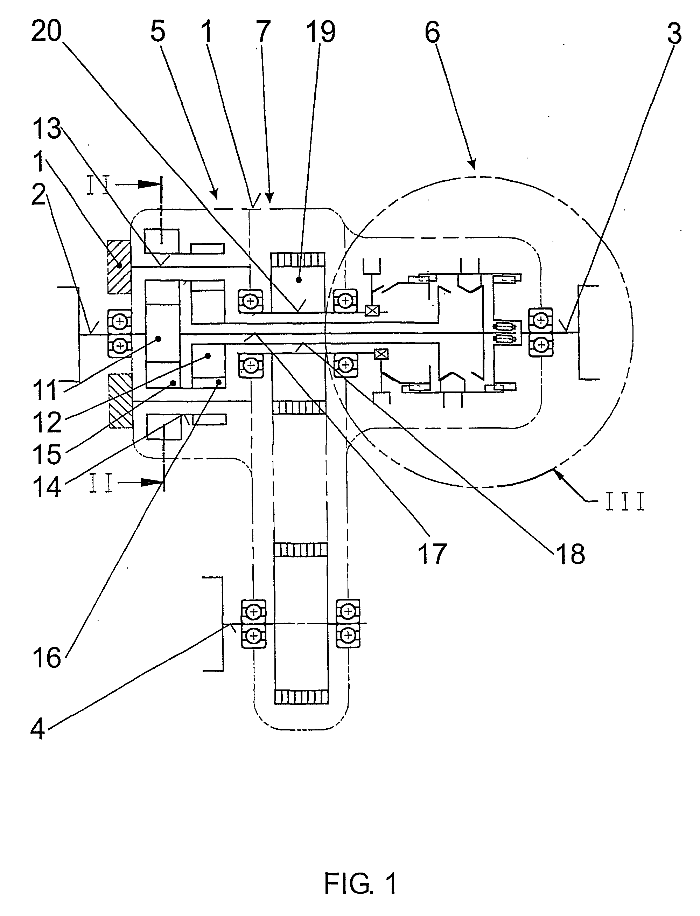

In Fig. 1 ist das Gehäuse eines Verteilergetriebes nur angedeutet und mit 1 bezeichnet. Das Verteilergetriebe steht über eine Eingangswelle 2 mit einer nicht dargestellten Motor-Getriebe-Einheit in Verbindung, über eine erste mit der Eingangswelle 2 koachsiale erste Ausgangswelle 3 mit einer Achse, vorzugsweise der hinteren Achse eines allradgetriebenen Kraftfahrzeuges, und über eine zweite Ausgangswelle 4 mit einer zweiten angetriebenen Achse, vorzugsweise der Vorderachse. Im Gehäuse 1 sind als Baugruppen des Verteilergetriebes eine Untersetzungseinheit 5, eine Kupplungseinheit 6 und ein Versatztrieb 7 zum Antrieb der gegenüber der ersten Ausgangswelle 3 versetzten zweiten Ausgangswelle 4 untergebracht.

Die Untersetzungseinheit 5 besteht aus einem mit der Eingangswelle 2 drehfest verbundenen zentralen Antriebszahnrad 11, einem zentralen Abtriebszahnrad 12 und aus zwei auf gehäusefesten Achsen 13 gelagerten Vorgelegen 14. Die Anzahl der Vorgelege kann größer oder kleiner gewählt sein. Bei zwei Vorgelegen sind die Lager des zentralen Abtriebszahnrades von radialen Kräften entlastet, bei 3 Vorgelegen ist das zentrale Abtriebszahnrad 12 zentriert. Das Vorgelege 14 besitzt ein erstes Vorgelegezahnrad 15 und ein zweitesVorgelegezahnrad 16, die drehfest miteinander verbunden bzw einstückig sind. An das zentrale Antriebszahnrad 11 schließt eine erste Abtriebswelle 17 an, an das zentrale Abtriebszahnrad 12 eine zweite Abtriebswelle 18, welche eine die erste Abtriebswelle umgebende Hohlwelle ist. Diese treiben wahlweise über die Kupplungseinheit 6 ein mit einer zweiten Hohlwelle 20 gelagertes treibendes Rad 19 des Versatztriebes 7 und die erste Ausgangswelle 3. Vorzugsweise ist das treibende Rad 19 drehfest mit der im Gehäuse 1 gelagerten zweiten Hohlwelle 20 verbunden. Das treibende Rad 19 ist entweder ein Zahnrad oder ein entsprechend gestaltetes Rad einer Zugmittelübertragung zu der versetzten zweiten Ausgangswelle 4.

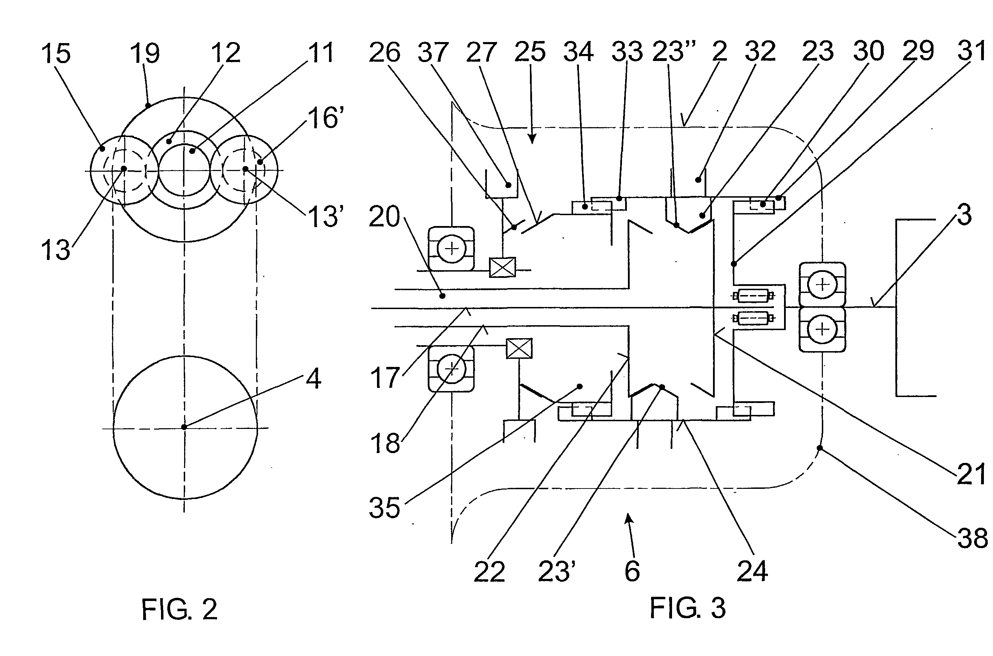

Fig. 2 zeigt die Zahnräder der Untersetzungseinheit 5, wobei aber in Abwandlung der Fig. 1 die beiden gehäusefesten Achsen 13, 13' nicht über und unter dem zentralen Antriebsrad 11, sondern rechts und links von diesem angeordnet sind. Diese Anordnung ist vorteilhaft, wenn der Versatz zwischen den beiden Ausgangswellen 3,4 kleiner sein soll.

In Fig.3 ist die Kupplung 6 bereits in ihrer synchronisierten Ausführungsform gezeigt, sie könnte ebenso mit unsynchronisierten Kupplungen ausgeführt sein. Die Kupplungseinheit 6 besteht im wesentlichen aus: einem mit der ersten Abtriebswelle 17 drehfest verbundenen ersten Primärteil 21, einem drehfest mit der zweiten Abtriebswelle 18 verbundenen zweiten Primärteil 22, einem drehfest mit der ersten Ausgangswelle 3 verbundenen Sekundärteil 23 und einer Schaltmuffe 24. Weiters ist eine Zuschaltkupplung 25 vorgesehen, deren erster Kupplungsteil 26 mit der zweiten Hohlwelle 20 und dessen zweiter Kupplungsteil 27 unter Zwischenschaltung der Schaltmuffe 24 mit der ersten Ausgangswelle 3 drehfest verbunden ist.

In der gezeigten Ausführungsform ist der Sekundärteil 23 fest mit der Schaltmuffe 24 verbunden. Er besitzt hier konische Kontaktflächen 23', 23 ". Im Strassengang liegt die Kontaktfläche 23' an Kontaktflächen des ersten Primärteiles 21 an (ober e Bildhälfte). Im Geländegang liegt die zweite Kontaktfläche 23' am zweiten Primärteil 22 an (untere Bildhälfte). Die Kontaktflächen 23', 23" und die zugehörigen Primärteile 21, 22 sind als Synchronkupplungen ausgebildet. Diese sind nicht genauer beschrieben, weil alle denkbaren Arten von Synchronkupplungen eingesetzt werden können. Die Schaltmuffe 24 ist auf der einen Seite über eine erste Kuppelverzahnung 29, 30 mit einer Abtriebsnabe 31 verbunden, die Teil der ersten Ausgangswelle 3 ist. Auf der anderen Seite ist die Schaltmuffe 24 über eine zweite Kuppelverzahnung 33, 34 auf einer Nabe 35 abgestützt, die im Gehäuse oder auf der zweiten Abtriebswelle 18 drehbar gelagert sein kann. Auf diese Weise ist die Schaltmuffe 24 beiderseits zentriert und mittels einer nicht dargestellten Schaltgabel, die in eine Ringnut 32 eingreift, in achsialer Richtung verschiebbar.

Die Nabe 35 wirkt mit der Zuschaltkupplung 25 zusammen. Sie ist nämlich als zweiter Kupplungsteil 27 ausgebildet, der bei zugeschaltetem Vorderradantrieb mit dem ersten Kupplungsteil 26 zusammenwirkt. Dazu ist der erste Kupplungsteil 26 mittels einer Zahnwellenverbindung 36 mit der zweiten Hohlwelle 20 drehfest aber in achsialer Richtung verschiebbar verbunden. Zum Zuschalten des Vorderradantriebes wird der erste Kupplungsteil 26 von einer nicht dargestellten, in eine Nut 37 eingreifenden Schaltgabel, nach rechts geschoben, bis dieser mit dem zweiten Kupplungsteil 27 in Eingriff kommt. Auch hier ist wieder eine nicht näher dargestellte Synchronisienmg vorgesehen. Die gesamte Kupplungseinheit 6 ist in einem Kupplungsgehäuse 38 untergebracht, das an das Gehäuse 1 des Verteilergetriebes angeflanscht ist.

## Patentansprüche

1. Verteilergetriebe für Kraftfahrzeuge mit Geländegang, bestehend aus einem Gehäuse (1), einer Eingangswelle (2), einer mit dieser koachsialen ersten Ausgangswelle (3), einer gegenüber dieser versetzten zweiten Ausgangswelle (4), einer Untersetzungseinheit (5), einer Kupplungseinheit (6) und einem Versatztrieb (7), **dadurch gekennzeichnet, dass** die Untersetzungseinheit (5) aus einem mit der Eingangswelle drehfest verbundenen zentralen Antriebszahnrad (11) besteht, einem ebenfalls zentralen Abtriebszahnrad (12) und mindestens zwei um gehäusefeste Achsen (13) drehbare Vorgelege (14) mit je zwei Vorgelegezahnrädern (15,16), von denen eines (15) mit dem zentralen Antriebszahnrad (11) und das andere (16) mit dem zentralen Abtriebszahnrad (12) kämmt, einer ersten mit dem zentralen Antriebszahnrad (11) drehfest verbundenen ersten Abtriebswelle (17) und einer mit dem zentralen Abtriebszahnrad (12) drehfest verbunden-en hohlen zweiten Abtriebswelle (18), und beide Abtriebswellen (17,18) zur mit der ersten Ausgangswelle (3) koachsialen Kupplungseinheit (6) führen.

2. Verteilergetriebe nach Anspruch 1, **dadurch gekennzeichnet, dass** der Versatztrieb (7) in Längsrichtung betrachtet zwischen Untersetzungseinheit (5) und Kupplungseinheit (6) angeordnet und dessen treibendes Rad (19) mit einer zweiten Hohlwelle (20) drehbar gelagert ist.

3. Verteilergetriebe nach Anspruch 1 oder 2, **dadurch gekennzeichnet, dass** die Kupplungseinheit einen ersten (21) und einen zweiten (22) Primärteil (21, 22) und einen dazwischen angordneten in Achsrichtung verschiebbaren Sekundärteil (23) besitzt, wobei der erste Primärteil (21) mit der ersten Abtriebswelle (17) und der zweite Primärteil (22) mit der zweiten Abtriebswelle (18) drehfest verbunden ist und der Sekundärteil (23) fest mit einer Schaltmuffe (24) verbunden ist, die mit der ersten Ausgangswelle (3) drehfest und achsial verschiebbar verbunden ist.

4. Verteilergetliebe nach Anspruch 3, **dadurch gekennzeichnet, dass** die Schaltmuffe (24) des Sekundärteiles (23) mittels einer Zuschaltkupplung (25) mit dem treibenden Rad (19) des Versatztriebes (7) verbindbar ist.

5. Verteilergetriebe nach Anspruch 4, **dadurch gekennzeichnet, dass** die Zuschaltkupplung (25) aus einem mit dem treibenden Rad (19) des Versatztriebes (7) drehfest, aber verschiebbar verbundenen ersten Kupplungsteil (26) und aus einem mit der Schaltmuffe (24) drehfest verbundenen zweiten Kupplungsteil (27) besteht.

6. Verteilergetriebe nach Anspruch 4, **dadurch gekennzeichnet, dass** die einen oder anderen der Kupplungsteile (21,22,23,26,27) Synchronisiervorrichtungen aufweisen.

7. Verteilergetriebe nach Anspruch 1, **dadurch gekennzeichnet, dass** die Kupplungseinheit (7) von einem an der hinteren Seite des Gehäuses (1) angeflanschten Kupplungsgehäuse (28) aufgenommen ist.

## Claims

1. A transfer case for motor vehicles with off-the-road gear, comprising a casing (1), an input shaft (2), a first output shaft (3), coaxial with the latter, a second output shaft (4), offset therefrom, a speed-reduction unit (5), a coupling unit (6) and an offset drive (7), **characterized in that** the speed-reduction unit (5) comprises a central drive gearwheel (11), connected in a rotationally fixed manner to the input shaft, a likewise central driven gearwheel (12) and at least two intermediate transmissions (14), rotatable about spindles (13) fixed to the casing, each with two intermediate gearwheels (15, 16), one of which (15) meshes with the central drive gearwheel (11) and the other (16) meshes with the central drive gearwheel (12), a first driven shaft (17), connected in a rotationally fixed manner to the central 1 drive gearwheel (11), and a hollow second driven shaft (18), connected in a rotationally fixed manner to the central driven gearwheel (12), and both driven shafts (17, 18) lead to the coupling unit (6) which is coaxial with the first output shaft (3).

2. The transfer case as claimed in claim 1, **characterized in that** the offset drive (7) is arranged between the speed-reduction unit (5) and the coupling unit (6)', viewed in the longitudinal direction, and its driving wheel (19) is mounted rotatably with a second hollow shaft (20).

3. The transfer case as claimed in claim 1 or 2, **characterized in that** the coupling unit has a first primary part (21) and a second primary part (22) and an axially displaceable secondary part (23) arranged in between, the first primary part (21) being connected in a rotationally fixed manner to the first driven shaft (17) and the second primary part (22) being connected in the same way to the second driven shaft (18), and the secondary part (23) being firmly connected to a shift sleeve (24), which is connected in a rotationally fixed and axially displaceable manner to the first output shaft (3).

4. The transfer case as claimed in claim 3, **characterized in that** the shift sleeve (24) of the secondary part (23) can be connected by means of a cut-in coupling (25) to the driving wheel (19) of the offset drive (7).

5. The transfer case as claimed in claim 4, **characterized in that** the cut-in coupling (25) comprises a first coupling part (26), which is connected in a rotationally fixed but displaceable manner to the driving wheel (19) of the offset drive (7), and a second coupling part (27), which is connected in a rotationally fixed manner to the shift sleeve (24 ) .

6. The transfer case as claimed in claim 4, **characterized in that** one or the other of the coupling parts (21, 22, 23, 26, 27) has synchronizing devices.

7. The transfer case as claimed in claim 1, **characterized in that** the coupling unit (7) is accommodated by a coupling casing (28) flange-mounted on the rear side of the casing (1).

## Revendications

1. Boîte intermédiaire pour des véhicules tout terrain, comprenant un carter (1), un arbre d'entrée (2), un premier arbre de sortie (3) situé sur le même axe que celui-ci, un deuxième arbre de sortie (4) déporté par rapport à celui-ci, une unité de réduction (5), une unité de couplage (6), et une transmission déportée (7), **caractérisée en ce que** l'unité de réduction (5) comprend un pignon menant (11) central calé en rotation sur l'arbre d'entrée, un pignon mené (12) également central et au moins deux transmissions intermédiaires (14) pouvant tourner autour d'axes (13) fixes par rapport au carter, présentant chacun deux pignons intermédiaires (15, 16), dont l'un (15) s'engrène avec le pignon menant central (11) et l'autre (16) avec le pignon mené central (12), tandis qu'un premier arbre mené (17) est calé en rotation avec le pignon menant central (11) et un deuxième arbre mené creux (18) est calé en rotation avec le pignon mené central (12), les deux arbres menés (17, 18) conduisant à l'unité de couplage (6) se trouvant sur le même axe que le premier arbre de sortie (3).

2. Boîte intermédiaire selon la revendication 1, **caractérisée en ce que** la transmission déportée (7) est disposée entre l'unité de réduction (5) et l'unité de couplage (6), quand on regarde dans la direction longitudinale, et sa roue menante (19) est calée en rotation avec un deuxième arbre creux (20).

3. Boîte intermédiaire selon la revendication 1 ou 2, **caractérisée en ce que** l'unité de couplage possède un premier (21) et un deuxième (22) éléments primaires ainsi qu'un élément secondaire (23) disposé entre ceux-ci et pouvant être déplacé axialement, de sorte que le premier élément primaire (21) est calé en rotation avec le premier arbre mené (17) et le deuxième élément primaire (22) est calé en rotation avec le deuxième arbre mené (18), et l'élément secondaire (23) est solidaire d'un manchon d'accouplement (24) qui est calé en rotation et déplaçable axialement sur le premier arbre de sortie (3)

4. Boîte intermédiaire selon la revendication 3, **caractérisée en ce que** le manchon de couplage (24) de l'élément secondaire (23) peut être relié avec la roue menante (19) de la transmission déportée (7) à l'aide d'un embrayage (25) .

5. Boîte intermédiaire selon la revendication 4, **caractérisée en ce que** l'embrayage (25) est constitué d'un premier élément d'embrayage coulissant (26) et lié en rotation à la roue menante (19) de la transmission déportée (7), et d'un deuxième élément de couplage (27) lié en rotation au manchon de raccordement (24).

6. Boîte intermédiaire selon la revendication 4, **caractérisée en ce que** l'un ou l'autre des éléments de couplage (21, 22, 23, 26, 27) présente des dispositifs de synchronisation.

7. Boîte intermédiaire selon la revendication 1, **caractérisée en ce que** l'unité de couplage (7) est logée dans un carter de couplage (28) bridé sur le côté arrière du carter (1).
